# EUROPÄISCHE PATENTSCHRIFT

(11) **EP 3 020 509 B1**
(45) Veröffentlichungstag und Bekanntmachung des Hinweises auf die Patenterteilung: **05.12.2018**
(21) Anmeldenummer: 15192095.6
(22) Anmeldetag: 29.10.2015
(51) Int. Cl.: B25B 27/10, F16L 13/14

(54) **PRESSWERKZEUG MIT GEGENLÄUFIGEM AXIALHUB**
PRESS TOOL WITH OPPOSING AXIAL HUB
OUTIL DE PRESSE A COURSE AXIALE CONTRAIRE

(30) Priorität: 13.11.2014 DE 102014116597
(43) Veröffentlichungstag der Anmeldung: 18.05.2016
(73) Patentinhaber: Viega Technology GmbH & Co. KG, 57439 Attendorn (DE)
(72) Erfinder: Hofmann, Frank, 57439 Attendorn (DE)
(74) Vertreter: Cohausz & Florack

(56) Entgegenhaltungen:
- EP-A2- 1 293 273
- WO-A1-2014/000897
- US-A- 4 956 904

## Beschreibung

Die Erfindung betrifft ein Presswerkzeug zum Herstellen einer unlösbaren Rohrverbindung, mit Haltemitteln zum umfangsseitigen Halten wenigstens eines ersten rohr- oder hülsenförmigen Verbindungselements und mit Schiebemitteln zum umfangsseitigen Halten und axialen Verschieben wenigstens eines zweiten rohr- oder hülsenförmigen Verbindungselements, wobei die Schiebemittel zum Verpressen zweier ineinandergreifender rohr- oder hülsenförmiger Verbindungselemente entlang einer ersten axialen Wirkrichtung in Richtung der Haltemittel bewegbar sind, wobei die Schiebemittel zum Verpressen zweier ineinandergreifender rohr- oder hülsenförmiger Verbindungselemente entlang einer der ersten axialen Wirkrichtung entgegengesetzten, zweiten axialen Wirkrichtung in Richtung der Haltemittel bewegbar sind, wobei die Schiebemittel wenigstens eine erste Schiebeeinheit und wenigstens eine zweite Schiebeeinheit aufweisen und wobei die Schiebeeinheiten axial gegenläufig verschiebbar und dazu gebildet sind, in entgegengesetzten Wirkrichtungen mit den Haltemitteln zusammenzuwirken. Zudem betrifft die Erfindung ein System zum Herstellen einer unlösbaren Rohrverbindung mit einem solchen Presswerkzeug.

Presswerkzeuge der eingangs genannten Art kommen bei der Installation von Rohrleitungssystemen zum Einsatz. Dabei dienen die Presswerkzeuge zum Verbinden einzelner Rohre oder Rohrleitungselemente mit Hilfe sogenannter Fittings. Ein Rohrende eines zu verbindenden Rohrs wird in ein üblicherweise ebenfalls rohr- bzw. hülsenförmiges Fitting an einer Stirnseite des Fittings eingeführt. Das Fitting wird mithilfe des Presswerkzeugs gegen das zugeordnete Rohrende in radialer Richtung verpresst, wobei das Presswerkzeug das Fitting und das Rohr üblicherweise umfangsseitig umgreift. Fitting und Rohr werden im Zuge des Pressvorgangs in radialer Richtung plastisch verformt und auf diese Weise unlösbar miteinander verbunden.

Einerseits sind Presswerkzeuge bekannt, mit denen Fitting und Rohr durch eine Verengung eines Aufnahmebereichs, in dem Fitting und Rohr umfangsseitig gehalten sind, unmittelbar in radialer Richtung verformt werden, wobei die "radiale Richtung" quer zur Längserstreckung des anzubindenden Rohrendes orientiert ist. Andererseits sind axiale Verbindungstechniken bekannt, wobei üblicherweise zwei- oder mehrteilige Fittings eingesetzt werden. Eine Presshülse wird dabei auf einen das jeweils zu verbindende Rohrende einfassenden, ebenfalls hülsenförmigen Grundkörper des Fittings in axialer Richtung aufgeschoben, wobei die "axiale Richtung" entlang der Längserstreckung des Rohrendes und damit quer zum Rohrquerschnitt orientiert ist. Der Durchmesser der inneren Mantelfläche der Presshülse ist über der Breite der Presshülse verjüngt ausgeführt, so dass der Grundkörper des Fittings und das anzuschließende Rohrende beim axialen Aufschieben der Presshülse in ihrem Durchmesser radial verengt werden.

Aus dem Dokument DE 10 2012 105 655 A1 ist eine gattungsgemäßes Presswerkzeug bekannt, das zum axialen Fügen in voranstehend beschriebener Weise zwei- oder mehrteiliger Fittings vorgesehen ist. Das aus diesem Dokument bekannte Presswerkzeug weist zueinander schwenkbare Schwenkmodule auf, wobei zwischen den Schwenkmodulen ein Aufnahmebereich zur Aufnahme eines Rohrs und eines Fittings gebildet ist. Eine Schiebevorrichtung dient dazu, eine Presshülse entlang des Aufnahmebereichs in einer axialen Wirkrichtung auf einen hülsenförmigen Grundkörper eines Fittings aufzuschieben, wobei der Grundkörper während des Pressvorgangs in einer Haltevorrichtung des Werkzeugs eingespannt bzw. fixiert ist.

Bei dem aus DE 10 2012 105 655 A1 bekannten Presswerkzeug ist nachteilig, dass das Aufschieben der Presshülse durch die Schiebeeinheit des Presswerkzeugs axial auf eine Wirkrichtung beschränkt ist. Soll beispielsweise ein Fitting mit zwei gegenüberliegenden Pressenden gefügt werden, ist zunächst eine erste Presshülse entlang einer ersten Wirkrichtung auf das erste Pressende des Fittings aufzuschieben. Anschließend ist entlang einer zweiten, der ersten Wirkrichtung entgegengesetzten Wirkrichtung eine zweite Presshülse auf das zweite Pressende des Fittings aufzuschieben. Aufgrund des auf eine Wirkrichtung beschränkten Axialhubs der Schiebeeinheit des aus DE 10 2012 105 655 A1 bekannten Presswerkzeugs, muss das Presswerkzeug zwischen den beiden Pressvorgängen um 180° gedreht werden, bevor das Verpressen der zweiten Presshülse in der zweiten Wirkrichtung erfolgen kann. Das Fügen von Fittings oder Muffen mit zwei Pressenden ist daher umständlich und zeitintensiv.

In der EP 1 293 273 A2 wird ein Presswerkzeug für eine axiale Verformung einer Ringwulst eines Fittings beschrieben. Hierbei sind zwei Presselemente vorgesehen, welche über schräge Flächen bei einer radialen Bewegung von Pressbacken eine axiale Verschiebung durchlaufen.

Die US 4,956,904 A betrifft ein Presswerkzeug zur Verbindung von Rohren, wobei zwei gegenläufig verschiebbare Halbschalen vorgesehen sind.

Ausgehend von dem voranstehend beschriebenen Stand der Technik lag der vorliegenden Erfindung die Aufgabe zu Grunde, ein Presswerkzeug anzugeben, welches die voranstehenden Nachteile nicht oder in zumindest geringerem Maße aufweist und insbesondere in einfacher Weise ein flexibleres und effizienteres Herstellen von Rohrverbindungen ermöglicht.

Diese Aufgabe ist durch ein gattungsgemäßes Presswerkzeug gelöst worden, welches sich erfindungsgemäß dadurch auszeichnet, dass die Schiebeeinheiten entlang wenigstens einer gemeinsamen Achse geführt sind, wobei die Schiebeeinheiten in einer Grundstellung benachbart zueinander angeordnet sind.

Es ist erkannt worden, dass ein flexibleres und effizienteres Herstellen von Rohrverbindungen erreicht werden kann, wenn die Schiebemittel dazu geeignet sind, in einer Ausrichtung bzw. Orientierung des Presswerkzeugs Verbindungselemente in zwei entgegengesetzten Wirkrichtungen zu fügen. Auf diese Weise ist entgegen vorbekannter Lösungen ein umständliches Drehen des Presswerkzeugs und einer gegebenenfalls mit dem Presswerkzeug verbundenen Kraftmaschine nicht mehr erforderlich, wenn beispielsweise axial zu fügende Verbindungselemente mit zwei Pressenden zu verpressen sind.

An dem Presswerkzeug sind Haltemittel zum umfangsseitigen Halten wenigstens eines ersten rohr- oder hülsenförmigen Verbindungselements vorgesehen. Dazu können die Haltemittel einem Verbindungselement zugeordnete Klemmflächen aufweisen, wobei das Verbindungselement zwischen den Klemmflächen eingespannt werden kann. Die Klemmflächen können dem Umfang des Verbindungselements angepasst sein, so dass die Klemmflächen das Verbindungselement umfangsseitig vollständig umgreifen, wobei eine flächige, möglichst homogene Übertragung der Klemmkräfte in radialer Richtung erfolgt. So können die Haltemittel beispielsweise eine im Wesentlichen zylindrische Durchgangsöffnung zum Aufnehmen und Verspannen bzw. Verklemmen eines ebenfalls im Wesentlichen zylindrischen Verbindungselements begrenzen. Dabei weist der Durchmesser der Durchgangsöffnung der Haltemittel zum Durchmesser der äußeren Mantelfläche des zylindrischen Verbindungselements ein Untermaß auf. Ein solches mit den Haltemitteln zu haltendes Verbindungselement kann beispielsweise ein hülsenförmiger Grundkörper eines Fittings sein, auf den zum Herstellen einer Rohrverbindung eine Presshülse in axialer Richtung aufzuschieben ist.

Die Klemmflächen der Haltemittel können beim Verklemmen in die äußere Mantelfläche des Verbindungselements eindringen bzw. diese plastisch verformen. Die Klemmflächen greifen in diesem Fall in radialer Richtung in das Material des Verbindungselements ein, so dass eine formschlüssige Verbindung zwischen den Haltemitteln und dem Verbindungselement in axialer Richtung gebildet ist. Im Bereich der Haltemittel kann zum Festlegen eines Verbindungselements entgegen einem Verschieben in axialer Richtung daher sowohl eine kraft- als auch eine formschlüssige Verbindung zwischen den Haltemitteln und dem durch das Presswerkzeug zu haltenden Verbindungselement hergestellt werden. Dazu können die Klemmflächen profiliert ausgeführt sein, so dass zwischen der Profilierung und der äußeren Mantelfläche des Verbindungselements eine Mehr- oder Vielzahl ineinandergreifender Formelemente gebildet werden kann, die einem axialen Verschieben des Verbindungselements relativ zu dem Presswerkzeug entgegenwirken.

Das Presswerkzeug hat Schiebemittel zum umfangsseitigen Halten und axialen Verschieben wenigstens eines zweiten rohr- oder hülsenförmigen Verbindungselements. Ein solches zu verschiebendes Verbindungselement kann eine dem voranstehend beschriebenen Grundkörper eines Fittings zugeordnete Presshülse sein, die, wie einleitend beschrieben, zum radialen Verpressen des Grundkörpers in axialer Richtung auf diesen Grundkörper aufzuschieben ist. Der innere Durchmesser einer solchen Presshülse ist über deren Breite entgegen der Fügerichtung verjüngt ausgeführt, so dass die äußere Mantelfläche des Grundkörpers beim axialen Aufschieben der Presshülse durch die innere Mantelfläche der Presshülse in radialer Richtung nach innen verdrängt wird.

Die Schiebemittel können einem Verbindungselement zugewandte Klemmflächen zum Aufnehmen und Halten des Verbindungselements aufweisen, wobei die Klemmflächen insbesondere an den Umfang des Verbindungselements angepasst sind und beim Verpressen zweier Verbindungselemente im Wesentlichen bündig an der äußeren Mantelfläche des zugeordneten Verbindungselements anliegen.

Die Schiebemittel können einen in radialer Richtung nach innen auskragenden Steg aufweisen, um eine formschlüssige Anlage zu einer Planseite des zugeordneten rohr- oder hülsenförmigen Verbindungselements in axialer Richtung zu schaffen. Über diesen Steg können die zum axialen Verschieben und (radialen) Verpressen zweier rohr- oder hülsenförmiger Verbindungselemente manuell oder maschinell in das Presswerkzeug eingeleiteten Presskräfte auf die in den Schiebe- und Haltemitteln gehaltenen Verbindungselemente übertragenden werden. Der Steg kann beispielsweise Teil einer im Bereich einer inneren Mantelfläche der Haltemittel vorgesehenen Nut sein. Während des Pressvorgangs ist das jeweils den Schiebemitteln zugeordnete Verbindungselement an dem Steg entgegen der jeweiligen Wirkrichtung in axialer Richtung abgestützt, so dass der Steg einen axialen Anschlag für das Verbindungselement bildet. Mit Hilfe der Halte- und Schiebemittel ist es insbesondere möglich, zu verpressende rohr- oder hülsenförmige Verbindungselemente vor dem eigentlichen Pressvorgang im Wesentlichen koaxial zueinander in dem Presswerkzeug zu fixieren.

Eine axiale Wirkrichtung, entlang der die Schiebemittel erfindungsgemäß zum Verpressen zweier ineinandergreifender rohr- oder hülsenförmiger Verbindungelemente in Richtung der Haltemittel bewegbar sind, ist eine Richtung, in der durch das Bewegen der Schiebemittel Fügekräfte zum Herstellen einer unlösbaren Rohrverbindung zwischen den Verbindungselementen übertragen werden können. Das erfindungsgemäße Presswerkzeug umfasst daher Schiebemittel, die einen gegenläufigen Axialhub mit zwei entgegengesetzten Wirk- bzw. Fügerichtungen bereitstellen. So können mit dem erfindungsgemäßen Presswerkzeug Pressvorgänge in entgegengesetzten Richtungen durchgeführt werden, ohne eine Veränderung der räumlichen Orientierung des Presswerkzeugs vorzunehmen. Die axialen Wirkrichtungen erstrecken sich insbesondere in entgegengesetzten Richtungen entlang einer gemeinsamen Achse.

Gemäß einem ersten Aspekt betrifft die Erfindung daher ein Presswerkzeug zum Herstellen einer unlösbaren Rohrverbindung, mit Haltemitteln zum umfangsseitigen Halten wenigstens eines ersten rohr- oder hülsenförmigen Verbindungselements und mit Schiebemitteln zum umfangsseitigen Halten und axialen Verschieben wenigstens eines zweiten rohr- oder hülsenförmigen Verbindungselements, wobei die Schiebemittel zum Verpressen zweier ineinandergreifender rohr- oder hülsenförmiger Verbindungselemente entlang einer ersten axialen Wirkrichtung in Richtung der Haltemittel bewegbar sind. Die Schiebemittel sind zum Verpressen zweier ineinandergreifender rohr- oder hülsenförmiger Verbindungselemente entlang einer der ersten axialen Wirkrichtung entgegengesetzten, zweiten axialen Wirkrichtung in Richtung der Haltemittel bewegbar.

Die Schiebemittel weisen wenigstens eine erste Schiebeeinheit und wenigstens eine zweite Schiebeeinheit auf. Die Schiebeeinheiten sind axial gegenläufig verschiebbar und dazu gebildet, in entgegengesetzten Wirkrichtungen mit den Haltemitteln zusammenzuwirken. Jeweils eine Schiebeeinheit bedient während eines Pressvorgangs daher eine axiale Wirkrichtung des Presswerkzeugs. Je nach geforderter Wirkrichtung kann der Anwender entweder die erste oder die zweite Schiebeeinheit zum axialen Verschieben eines zugeordneten Verbindungselements, insbesondere einer Presshülse, verwenden, ohne die räumliche Orientierung des Presswerkzeugs verändern zu müssen. Der Anwender kann dabei durch die axiale Positionierung des Werkzeugs relativ zu einem Verbindungselement die Wirkrichtung während des Pressvorgangs festlegen, da, je nach axialer Relativposition des Presswerkzeugs zu dem Verbindungselement, die erste oder die zweite Schiebeeinheit auf das Verbindungselement wirkt.

Die Schiebeeinheiten sind entlang wenigstens einer gemeinsamen Achse geführt, wobei die Schiebeeinheiten in einer Grundstellung, insbesondere eng, benachbart zueinander angeordnet sind. Die Schiebeeinheiten können beispielsweise auf wenigstens einem gemeinsamen Bolzen sitzen. Dazu können in den Schiebeinheiten jeweils Bohrungen vorgesehen sein, in denen der Bolzen aufgenommen ist. Ein solcher Bolzen kann insbesondere im Wesentlichen parallel zu den axial entgegengesetzten Wirkrichtungen erstreckt sein. Der Bolzen bildet in diesem Fall eine Linearführung, wobei die Schiebeeinheiten dazu gebildet sind, beim Verschieben der Schiebeinheiten entlang dieser Linearführung in entgegengesetzten Wirkrichtungen Fügekräfte auf zu fügende Verbindungselemente zu übertragen. Das Presswerkzeug kann folglich kompakt gebaut werden, wobei zudem die Freiheitsgrade der Schiebeeinheiten in einfacher Weise durch eine Linearführung definiert werden können.

Nach einer Weiterbildung des erfindungsgemäßen Presswerkzeugs können die Schiebeeinheiten federnd elastisch gegeneinander vorgespannt sein. Dabei können die Schiebeeinheiten in einer Grundstellung, d.h. vor der Aufnahme eines Verbindungselements und dem Einleiten eines Pressvorgangs, federnd elastisch gegeneinander verspannt sein und zentral auf einer gemeinsamen Achse sitzen. Damit ist die Position der Schiebeeinheiten innerhalb des Werkzeugs definiert, so dass ein Benutzer das Werkzeug problemlos und wiederholgenau im Bereich entsprechender Fügestellen relativ zu einem Fitting oder einer Muffe positionieren kann.

Die Haltemittel weisen nach einer Weiterbildung des in Rede stehenden Presswerkzeugs eine erste Halteeinheit und eine mit einem Abstand zu der ersten Halteeinheit angeordnete, zweite Halteeinheit auf. Die Schiebemittel sind zwischen der ersten Halteeinheit und der zweiten Halteeinheit angeordnet. Die erste Halteeinheit ist der ersten axialen Wirkrichtung und die zweite Halteeinheit der zweiten axialen Wirkrichtung zugeordnet. Beim Verpressen der Verbindungselemente in der jeweiligen axialen Wirkrichtung bilden die jeweils zugeordneten Halteeinheiten ein Widerlager, an dem das der Halteeinheit zugeordnete Verbindungselement gegen das von den Schiebemitteln in Richtung der Halteeinheit bewegte Verbindungselement abgestützt wird. Durch eine Anordnung der Schiebemittel zwischen den Halteeinheiten können die beweglichen Teile der Schiebeeinheiten vor Umgebungseinflüssen geschützt werden.

Zwischen den beiden Halteabschnitten können beispielsweise die zuvor bereits beschriebene erste und zweite Schiebeeinheit angeordnet sein. In diesem Fall ist die erste Schiebeeinheit der ersten Halteeinheit zugeordnet, während die zweite Schiebeeinheit der zweiten Halteeinheit zugordnet ist. Nach einer Weiterbildung des Presswerkzeugs ist zwischen der ersten Halteeinheit und der ersten Schiebeinheit eine erste Federeinheit und zwischen der zweiten Halteeinheit und der zweiten Schiebeeinheit eine zweite Federeinheit angeordnet. Die erste und zweite Schiebeeinheit können im Wesentlichen zentral zwischen den Halteeinheiten auf wenigstens einer gemeinsamen Achse angeordnet sein. In diesem Fall sind die jeweiligen Schiebeinheiten auf der ihrer Wirkrichtung abgewandten Seite gegen die jeweils andere Schiebeinheit und in ihrer Wirkrichtung über die jeweils zugeordnete Federeinheit gegen die jeweils zugeordnete Halteeinheit verspannt bzw. federnd elastisch abgestützt. Die Federeinheiten gewährleisten ein selbsttätiges Rückstellen der Schiebeeinheiten nach einem Pressvorgang in eine insbesondere im Wesentlichen zentrale Grundstellung zwischen den Halteeinheiten. Damit ist die Position der Schiebeeinheiten zwischen den Halteeinheiten in einer Grundstellung definiert, so dass ein Benutzer das Werkzeug problemlos und wiederholgenau im Bereich entsprechender Fügestellen relativ zu einem Fitting oder einer Muffe positionieren kann.

Nach einer Weiterbildung des Presswerkzeugs sind die Haltemittel und die Schiebemittel an quer zu den axialen Wirkrichtungen schwenkbaren Schwenkelementen vorgesehen. Dabei sind die Haltemittel und Schiebemittel wenigstens zweiteilig an den zueinander schwenkbaren Schwenkelementen gebildet. Beispielsweise können die erste und die zweite Halteeinheit aus einander zugeordneten Ausnehmungen zweier Schwenkelemente gebildet sein, die in einem geschlossenen Zustand der Schwenkelemente zwei zylindrische Aufnahmen zum Halten von Verbindungselementen bilden. In ähnlicher Weise können die erste und die zweite Schiebeeinheit aus einander zugeordneten Halbschalen gebildet sein, wobei eine erste Halbschale einer Schiebeeinheit an einem ersten Schwenkelement und die zweite Halbschale dieser Schiebeeinheit an einem zweiten Schwenkelement angeordnet sind. Durch diese konstruktive Ausführung lassen sich die Halte- und Schiebeeinheiten zum Positionieren der Verbindungselemente in dem Presswerkzeug durch ein Schwenken der Schwenkelemente öffnen und schließen. Die Schwenkachse, um die die Schwenkelemente zueinander verschwenkt werden, verläuft insbesondere parallel zu den axialen Wirkrichtungen. Jedes der Schwenkelemente kann auf einem separaten Bolzen bzw. einer separaten Achse gelagert sein.

Um die Schiebemittel entlang der axialen Wirkrichtungen zu verschieben, sind nach einer Ausgestaltung des erfindungsgemäßen Presswerkzeugs Pressmittel vorgesehen. Die Pressmittel und die Schiebemittel weisen einander zugeordnete Gleitflächen auf, wobei die Gleitflächen zum Umsetzen einer quer zu den axialen Wirkrichtungen erfolgenden Bewegung der Pressmittel in ein axiales Verschieben der Schiebemittel gebildet sind. Erste Gleitflächen sind zum Verschieben der Schiebemittel in der ersten Wirkrichtung und zweite Gleitflächen zum Verschieben der Schiebemittel in der zweiten Wirkrichtung vorgesehen. Die erforderlichen Presskräfte können über die Pressmittel in einem Abstand zu den Schiebemitteln in das Presswerkzeug eingeleitet werden, wobei eine Übersetzung bzw. Untersetzung von Stellkräften über mechanische Hebel erfolgen kann. Damit ist es in einfacher Weise möglich, Press- oder Stellkräfte mit Hilfe einer externen Kraftmaschine in das Presswerkzeug einzuleiten.

Nach einer vorteilhaften Weiterbildung sind die Pressmittel des Presswerkzeugs an quer zu den axialen Wirkrichtungen schwenkbaren Schwenkelementen vorgesehen. Die Schwenkelemente weisen insbesondere einen den Pressmitteln zugewandten, bis zu einer Schwenkachse des jeweiligen Schwenkelements erstreckten Aufnahmeabschnitt und einen den Pressmitteln abgewandten, ausgehend von der Schwenkachse erstreckten Betätigungsabschnitt auf. Die Betätigungsabschnitte dienen dem Einleiten von Presskräften in das Presswerkzeug. Durch das Verhältnis der Längen von Aufnahme- und Betätigungsabschnitt lassen sich die Über- bzw. Untersetzungen von Stellkräften und Stellwegen vorgeben.

Die Haltemittel, Schiebemittel und Pressmittel können wenigstens zweiteilig ausgeführt sein, wobei ein erster Teil einem ersten Schwenkmodul und ein zweiter Teil einem zweiten Schwenkmodul des Presswerkzeugs zugeordnet sind. Ein solches Schwenkmodul kann sich beispielsweise aus zwei separat voneinander um eine gemeinsame Schwenkachse schwenkbaren Schwenkelementen zusammensetzen. Dabei können die Halte- und Schiebmittel an einem ersten Schwenkelement eines solchen Schwenkmoduls und die Pressmittel an einem zweiten Schwenkelement eines solchen Schwenkmoduls gebildet sein. Auf diese Weise können die Haltemittel und die Schiebemittel über die ersten Schwenkelemente der Schwenkmodule unabhängig von den an den zweiten Schwenkelementen der Schwenkmodule gebildeten Pressmitteln verschwenkt bzw. betätigt werden. Damit ist es beispielsweise möglich, die zu fügenden Verbindungselemente in einem zweitstufigen Fügevorgang zunächst mit den Haltemitteln und den Schiebemitteln zu umgreifen und relativ zueinander im Wesentlichen koaxial zu positionieren, bevor durch ein Betätigen der Pressmittel der eigentliche Pressvorgang eingeleitet und die axiale Relativbewegung der Verbindungselemente durch die Schiebemittel bewirkt wird.

Die Pressmittel weisen nach einer weiteren Ausgestaltung der Erfindung in Richtung der Schiebemittel im Wesentlichen keilförmig zulaufende Pressabschnitte auf, an denen die ersten und zweiten Gleichflächen der Pressmittel gebildet sind, wobei die Schiebemittel zwischen den Pressabschnitten angeordnet sind und die Pressabschnitte die Schiebemittel quer zu den axialen Wirkrichtungen zumindest teilweise umgreifen. Da an einem Pressabschnitt sowohl eine erste als auch eine zweite Gleitfläche vorgesehen sind, lässt sich einerseits eine kompakte Bauweise des Presswerkzeugs erreichen. Zudem ist es mit einem solchen keilförmigen Pressabschnitt möglich, zwei benachbart auf einer Achse angeordnete, gegeneinander federnd elastisch vorgespannte Schiebeeinheiten in entgegengesetzten Richtungen auseinanderzutreiben. Über den keilförmigen Pressabschnitt kann daher ein gleichzeitiges Verschieben zweier Schiebeeinheiten in entgegengesetzten Wirkrichtungen erfolgen. Ein Betätigen der Pressmittels löst in diesem Fall synchron sowohl einen Axialhub des Presswerkzeugs in der ersten Wirkrichtung als auch in der zweiten Wirkrichtung aus. Zwei zu fügende Verbindungselemente können zum Herstellen einer Pressverbindung einseitig in dem Bereich der ersten Schiebeeinheit sitzen und in dem Presswerkzeug mit einem Abstand zu der jeweils anderen Schiebeeinheit angeordnet sein. Während des Verpressens zweier Verbindungselemente durch die erste Schiebeeinheit führt die zweite Schiebeeinheit gleichzeitig einen "Leerhub" aus, ohne eines der Verbindungselemente zu kontaktieren bzw. auf diese zu wirken. Der Anwender kann daher allein durch die axiale Positionierung der Verbindungselemente relativ zum Presswerkzeug die Pressrichtung bestimmen.

Nach einer Ausgestaltung des erfindungsgemäßen Presswerkzeugs sind die Haltemittel und/oder die Schiebemittel und/oder die Pressmittel bezüglich einer radialen Werkzeugebene im Wesentlichen spiegelsymmetrisch gestaltet, wobei die radiale Werkzeugebene quer zu den axialen Wirkrichtungen erstreckt ist. Insbesondere kann die radiale Werkzeugebene im Wesentlichen senkrecht zu den axialen Wirkrichtungen gebildet sein. Die symmetrische Bauweise ermöglicht eine kostengünstige Herstellung des Presswerkzeugs, da beispielsweise einander bezüglich der Werkzeugebene gegenüberliegende Komponenten der Haltemittel oder Schiebemittel, wie Halteeinheiten oder Schiebeeinheiten, identisch ausgeführt werden können.

Die Haltemittel und/oder die Schiebemittel und/oder die Pressmittel des in Rede stehenden Presswerkzeugs sind gemäß einer Weiterbildung bezüglich einer axialen Werkzeugebene im Wesentlichen spiegelsymmetrisch gestaltet, wobei die axiale Werkzeugebene entlang der axialen Wirkrichtungen erstreckt ist. Insbesondere ist die axiale Werkzeugebene im Wesentlichen parallel zu den axialen Wirkrichtungen orientiert. Wie voranstehend bereits erwähnt, lassen sich durch symmetrische Anordnung oder Gestaltung der Komponenten des Presswerkzeugs die Produktionskosten senken. Zudem kann in einfacher Weise eine homogene Krafteinleitung in die zu fügenden Verbindungselemente erreicht werden. Neben einzelnen Komponenten kann das gesamte Presswerkzeug im Wesentlichen spiegelsymmetrisch bezüglich der genannten Symmetrieebenen gestaltet sein.

Die Haltemittel und/oder die Schiebemittel und/oder die Pressmittel können in voranstehend beschriebener Weise an Schwenkmodulen vorgesehen sein, die quer zur axialen Werkzeugebene, insbesondere entlang bzw. parallel zur radialen Werkzeugebene schwenkbar sind. So kann das erfindungsgemäße Presswerkzeug aus zwei im Wesentlichen identisch gestalteten Schwenkmodulen gebildet sein, die jeweils auf einem Bolzen in einem Gehäuse gelagert sind.

Nach einer zweiten Variante des erfindungsgemäßen Presswerkzeugs zum Herstellen einer unlösbaren Rohrverbindung, mit Haltemitteln zum umfangsseitigen Halten wenigstens eines ersten rohr- oder hülsenförmigen Verbindungselements und mit Schiebemitteln zum umfangsseitigen Halten und axialen Verschieben wenigstens eines zweiten rohr- oder hülsenförmigen Verbindungselements, wobei die Schiebemittel zum Verpressen zweier ineinandergreifender rohr- oder hülsenförmiger Verbindungselemente entlang einer ersten axialen Wirkrichtung in Richtung der Haltemittel bewegbar sind, wobei die Schiebemittel zum Verpressen zweier ineinandergreifender rohr- oder hülsenförmiger Verbindungselemente entlang einer der ersten axialen Wirkrichtung entgegengesetzten, zweiten axialen Wirkrichtung in Richtung der Haltemittel bewegbar sind, weisen die Schiebemittel wenigstens eine schaltbare Schiebeeinheit auf, die in einer ersten Schaltstellung in die erste Wirkrichtung des Presswerkzeugs verschiebbar ist und in der zweiten Schaltstellung in die zweite Wirkrichtung des Presswerkzeugs verschiebbar ist. Eine einzelne Schiebeeinheit kann daher, abhängig von der jeweiligen Schaltstellung, einen Axialhub in der ersten axialen Wirkrichtung oder in der zweiten axialen Wirkrichtung ausführen. Das Presswerkzeug kann in diesem Fall besonders kompakt ausgestaltet werden. Es kann eine Schaltvorrichtung vorgesehen sein, mit der ein Nutzer die jeweilige Wirkrichtung durch ein Umschalten zwischen der ersten und der zweiten Schaltstellung für die auszuführende Pressaufgabe festlegt. Diese Ausgestaltung der Schiebeeinheit ist vor allem in schwer zugänglichen oder begrenzt einsehbaren Montagepositionen vorteilhaft, in denen der Anwender die genaue axiale Position des Werkzeugs relativ zu den Verbindungselementen nicht oder nur schwer bestimmen kann. So wird durch die Schaltfunktion die Wirkrichtung der Schiebemittel eindeutig vorbestimmt.

Nach einer Weiterbildung der voranstehenden Ausgestaltung sitzt die schaltbare Schiebeeinheit auf einem Bolzen, wobei die Schiebeeinheit zusammen mit dem Bolzen entlang einer Achse des Bolzens aus der ersten in die zweite Schaltstellung verschiebbar ist. Damit kann ein Benutzer durch eine einfache Verschiebung des Bolzens, insbesondere eine Verschiebung des Bolzens zwischen zwei durch Anschläge definierten Endlagen, die Wirkrichtung der Schiebemittel vorgeben. Die Schiebeeinheit kann relativ zu dem Bolzen federnd elastisch vorgespannt in einer zentralen Grundstellung gehalten sein. Durch die Grundstellung ist die Position der Schiebeeinheit relativ zu dem Bolzen sowohl für die erste als auch für die zweite Schaltstellung eindeutig festgelegt.

Die oben gezeigte Aufgabe wird erfindungsgemäß auch durch ein System zum Herstellen einer unlösbaren Rohrverbindung gelöst, mit einem ersten Verbindungselement zur Aufnahme eines zu verbindenden Rohrendes, mit einem dem ersten Verbindungselement zugeordneten zweiten Verbindungselement, das zum axialen Aufschieben auf das erste Verbindungselement gebildet ist, und mit einem zuvor beschriebenen erfindungsgemäßen Presswerkzeug zum Verpressen der Verbindungselemente.

Nachfolgend wird die Erfindung anhand einer Ausführungsbeispiele darstellenden Zeichnung näher beschrieben. In der Zeichnung zeigen
- Fig. 1: eine perspektivische Ansicht eines erfindungsgemäßen Presswerkzeugs in einem geschlossenen Zustand,
- Fig. 2a: eine Seitenansicht des Presswerkzeugs aus Fig. 1 in einem geöffneten Zustand,
- Fig. 2b: einen Schnitt des Presswerkzeugs entlang der Schnittlinie II-b aus Fig. 2a,
- Fig. 2c: einen Schnitt des Presswerkzeugs entlang der Schnittlinie II-c aus Fig. 2a,
- Fig. 3a: eine Seitenansicht des Presswerkzeugs aus Fig. 1 mit geschlossenen Haltemitteln,
- Fig. 3b: einen Schnitt des Presswerkzeugs entlang der Schnittlinie III-b aus Fig. 3a,
- Fig. 4a: eine Seitenansicht des Presswerkzeugs aus Fig. 1 im geschlossenen Zustand,
- Fig. 4b: einen Schnitt des Presswerkzeugs entlang der Schnittlinie IV-b aus Fig. 4a,
- Fig. 5a: eine perspektivische Ansicht eines weiteren erfindungsgemäßen Presswerkzeugs in einem geschlossenen Zustand,
- Fig. 5b: einen Schnitt des Presswerkzeugs entlang der Schnittlinie V-b aus Fig. 5a und
- Fig. 6: einen Teilschnitt eines weiteren erfindungsgemäßen Presswerkzeugs.

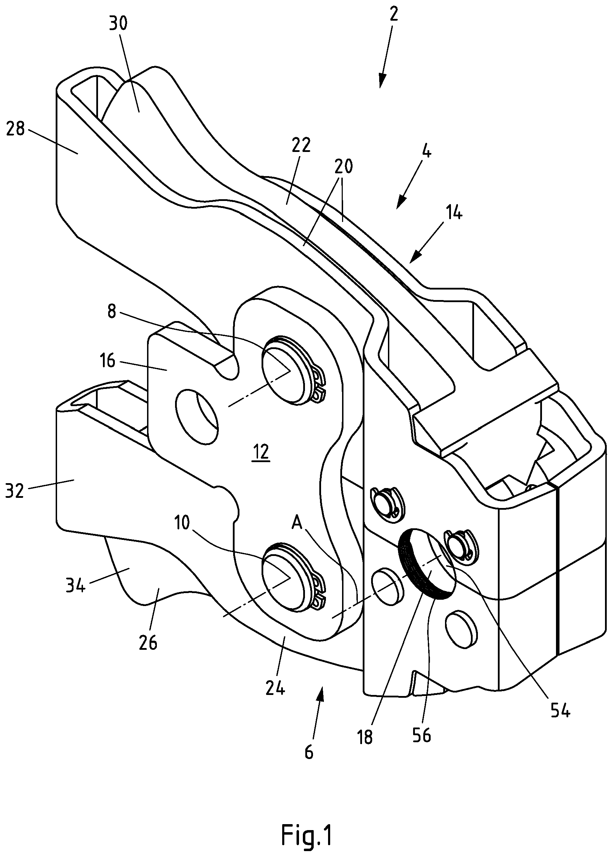

In Fig. 1 ist eine perspektivische Ansicht eines erfindungsgemäßen Presswerkzeugs 2 in einem geschlossenen Zustand dargestellt. Das Presswerkzeug 2 dient dem Herstellen unlösbarer Rohrverbindungen und weist ein erstes Schwenkmodul 4 und ein zweites Schwenkmodul 6 auf. Das erste Schwenkmodul 4 ist um eine erste Schwenkachse 8 und das zweite Schwenkmodul 6 um eine zweite Schwenkachse 10 schwenkbar gelagert. Die Schwenkachsen 8, 10 sind im Wesentlichen parallel zueinander angeordnet und sitzen in Bohrungen eines ersten Tragelements 12 und eines zweiten, dem ersten Tragelement 12 gegenüberliegend angeordneten Tragelements 14 (in Fig. 1 verdeckt). Die Tragelemente 12, 14 haben jeweils einen Kopplungsabschnitt 16 zum Ankoppeln einer Kraftmaschine (nicht dargestellt), wobei die Kraftmaschine dem Betätigen des Presswerkzeugs 2 dient.

Zwischen den Schwenkmodulen 4, 6 ist ein Aufnahmebereich 18 zur Aufnahme rohr- oder hülsenförmiger Verbindungselemente (nicht dargestellt) gebildet. In dem hier dargestellten geschlossenen Zustand des Presswerkzeugs 2 ist der Aufnahmebereich 18 eine im Wesentlichen zumindest abschnittsweise zylindrische Durchgangsöffnung. Eine Achse A des im Wesentlichen zylindrischen Aufnahmebereichs 18 ist im Wesentlichen parallel zu den Schwenkachsen 8, 10 orientiert. Die Schwenkmodule 4, 6 sind zweigeteilt. Das erste Schwenkmodul 4 weist ein äußeres Schwenkelement 20 und ein inneres Schwenkelement 22 auf, wobei das äußere Schwenkelement 20 das innere Schwenkelement 22 umgreift. Das zweite Schwenkmodul 6 weist ein äußeres Schwenkelement 24 und ein inneres Schwenkelement 26 auf, wobei das äußere Schwenkelement 24 das innere Schwenkelement 26 umgreift.

Die Schwenkelemente 20, 22, 24, 26 weisen Betätigungsabschnitte 28, 30, 32, 34 auf, an denen bei der Verwendung des Presswerkzeugs 2 Betätigungskräfte zum Schwenken der Schwenkmodule 4, 6, bzw. der Schwenkelemente 20, 22, 24, 26 der Schwenkmodule 4, 6, eingeleitet werden. Die einem jeweiligen Schwenkmodul 4, 6 zugeordneten Schwenkelemente 20, 22 und 24, 26 sind getrennt voneinander um ihre jeweilige Schwenkachse 8, 10 schwenkbar.

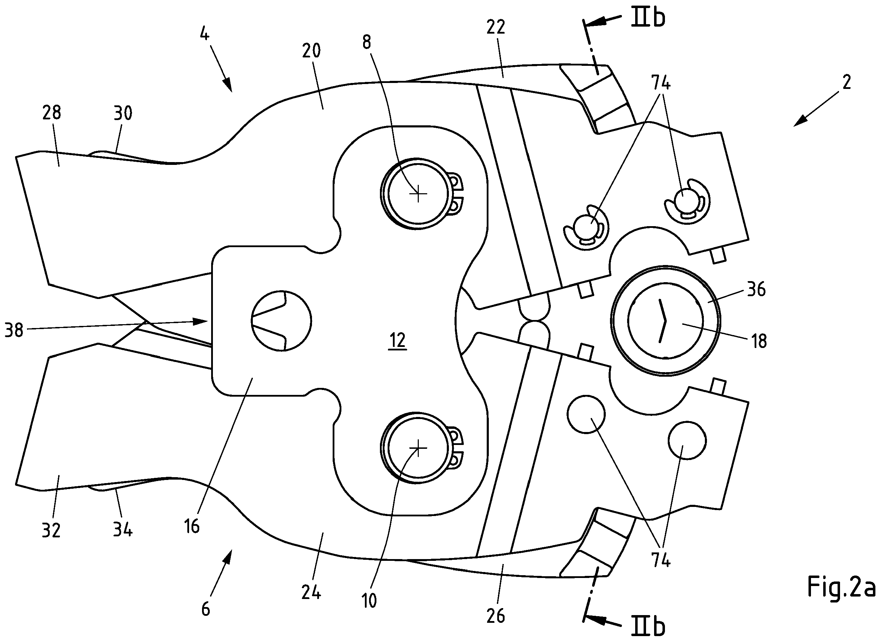

Um ein mit dem Presswerkzeug 2 zu verpressendes Fitting 36 in dem Aufnahmebereich 18 des Presswerkzeugs 2 zu positionieren, werden die Schwenkmodule 4, 6 ausgehen von der in Fig. 1 dargestellten geschlossenen Position in die in Fig. 2a dargestellte, geöffnete Stellung geschwenkt. Dazu werden die Schwenkelemente 20, 22 und 24, 26 im Bereich ihrer Betätigungsabschnitte 28, 30 und 32, 34 zusammengedrückt. Die Schwenkmodule 4, 6 sind um die Schwenkachsen 8, 10 über einen Vorspannmechanismus 38 (nicht im Detail dargestellt) federnd elastisch in ihrer geschlossen Position gegeneinander vorgespannt, so dass zum Überführen der Schwenkmodule 4, 6 aus der geschlossenen in die geöffnete Position, die durch den Vorspannmechanismus 38 erzeugte Vorspannung überwunden werden muss.

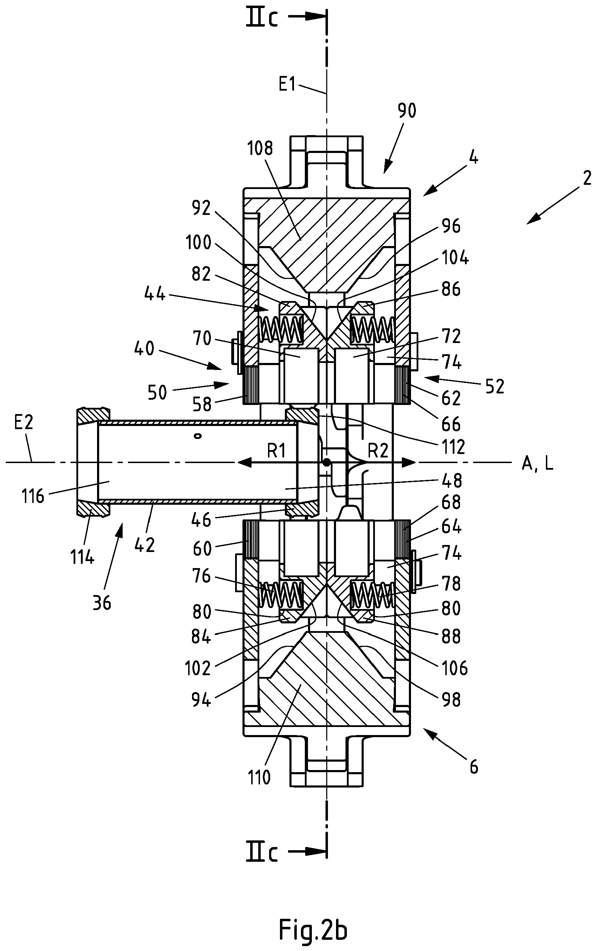

In Fig. 2b ist ein Schnitt des Presswerkzeugs 2 entlang der Schnittlinie II-b aus Fig. 2a dargestellt. Das Presswerkzeug 2 hat Haltemittel 40, die in dem hier dargestellten Beispiel dem umfangsseitigen Halten eines hülsenförmigen Grundkörpers 42 des Fittings 36 dienen. Zudem hat das Presswerkzeug 2 Schiebemittel 44 zum umfangsseitigen Halten und axialen Verschieben einer Presshülse 46 des Fittings 36. Das Fitting 36 ist mit seiner Längsachse L im Wesentlichen koaxial zur Achse A positioniert.

Die Presshülse 46 sitzt in einem in Fig. 2b dargestellten, vormontierten Zustand auf einem ersten Pressende 48 des Grundkörpers 42 des Fittings 36. Presshülse 46 und Grundkörper 42 greifen daher im Bereich des ersten Pressendes 48 des Fittings 36 ineinander. Zum Verpressen des Fittings 36 gegen ein in dem Fitting 36 sitzendes Rohrende (nicht dargestellt) sind die Schiebemittel 44 entlang einer ersten axialen Wirkrichtung R1 in Richtung der Haltemittel 40 bewegbar. Zudem sind die Schiebemittel 44 zum Verpressen des Fittings 36 gegen ein weiteres in dem Fitting 36 sitzendes Rohrende entlang einer der ersten axialen Wirkrichtung R1 entgegengesetzten, zweiten axialen Wirkrichtung R2 in Richtung der Haltemittel 40 bewegbar.

Die Haltemittel 40 weisen eine erste Halteeinheit 50 und eine der ersten Halteeinheit 50 gegenüberliegende, zur ersten Halteeinheit 50 beabstandet angeordnete zweite Halteeinheit 52 auf. Die erste Halteeinheit 50 ist aus einer an dem äußeren Schwenkelement 20 des ersten Schwenkmoduls 4 vorgesehenen ersten Ausnehmung 54 und einer an dem äußeren Schwenkelement 24 des zweiten Schwenkmoduls 6 vorgesehenen zweiten Ausnehmung 56 gebildet. Die dem Grundkörper 42 des Fittings 36 zugewandten Klemmflächen 58, 60 der Ausnehmungen 54, 56 sind profiliert. Die gegenüberliegend zu der ersten Halteeinheit 50 angeordnete zweite Halteeinheit 52 ist entsprechend aus einer an dem äußeren Schwenkelement 20 des ersten Schwenkmoduls 4 vorgesehenen ersten Ausnehmung 62 und einer an dem äußeren Schwenkelemente 24 des zweiten Schwenkmoduls 6 vorgesehenen zweiten Ausnehmung 64 gebildet. An den inneren Klemmflächen 66, 68 der Ausnehmungen 62, 64 ist ebenfalls jeweils eine Profilierung vorgesehen. Die Haltemittel 40 des Presswerkzeugs 2 weisen folglich zwei separate Halteeinheiten 50, 52 auf, die in axialer Richtung entlang der Achse A zueinander beabstandet sind. Jede dieser separaten Halteeinheiten 50, 52 ist aus einer dem ersten Schwenkmodul 4 zugeordneten ersten Ausnehmung 54, 62 und einer dem zweiten Schwenkmodul 6 zugeordneten zweiten Ausnehmung 56, 64 gebildet. Die erste Halteeinheit 50 ist der ersten axialen Wirkrichtung R1 und die zweite Halteeinheit 52 der zweiten axialen Wirkrichtung R2 zugeordnet.

Die Schiebemittel 44 sind zwischen der ersten Halteeinheit 50 und der zweiten Halteeinheit 52 angeordnet. Die Schiebemittel 44 weisen eine erste Schiebeeinheit 70 und eine zweite Schiebeeinheit 72 auf. Die Schiebeeinheiten 70, 72 sind axial gegenläufig verschiebbar und dazu gebildet, in entgegengesetzten Wirkrichtungen R1, R2 mit den Haltemitteln 40 zusammen zu wirken. Die Schiebeeinheit 70 ist ausgehend von ihrer in Fig. 2b dargestellten Grundstellung entlang der ersten axialen Wirkrichtung R1 in Richtung der ersten Halteeinheit 50 verschiebbar. Die zweite Schiebeeinheit 72 ist ausgehend von ihrer in Fig. 2b dargestellten Grundstellung entlang der zweiten axialen Wirkrichtung R2 in Richtung der zweiten Halteeinheit 52 verschiebbar. Beim Verpressen eines in dem Bereich der jeweiligen Schiebeeinheit 70, 72 angeordneten Fittings wirkt die erste Schiebeeinheit 70 mit der ersten Halteeinheit 50 und die zweite Schiebeeinheit 72 mit der zweiten Halteeinheit 52 zusammen.

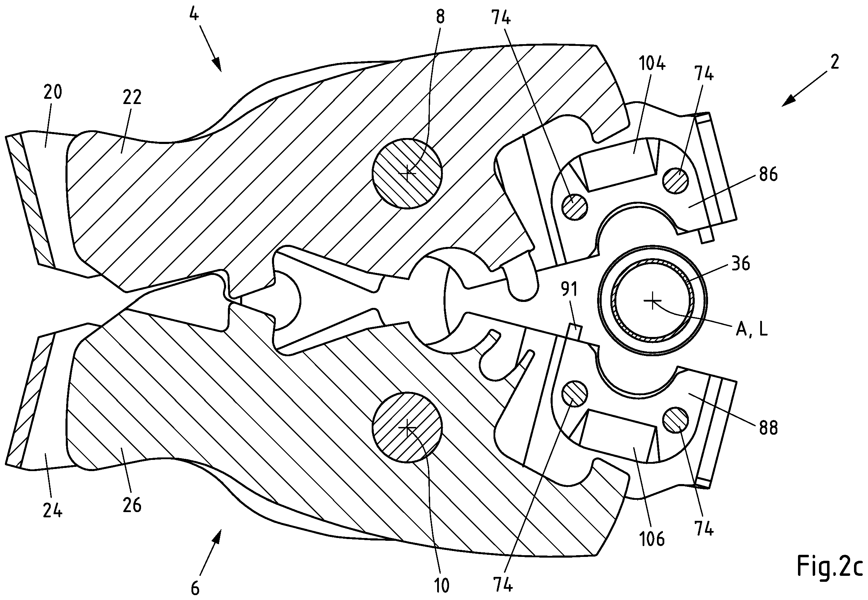

Die Schiebeeinheiten 70, 72 sind auf Bolzen 74 schiebebeweglich geführt. In der in Fig. 2b dargestellten Grundstellung der Schiebeeinheiten 70, 72 sind die Schiebeeinheiten 70, 72 eng benachbart zueinander angeordnet. Dabei sind die Schiebeeinheiten 70, 72 federnd elastisch gegeneinander vorgespannt. Zum Erzeugen der Vorspannkräfte ist zwischen der ersten Halteeinheit 50 und der ersten Schiebeeinheit 70 eine erste Federeinheit 76 und zwischen der zweiten Halteeinheit 54 und der zweiten Schiebeeinheit 72 eine zweite Federeinheit 78 angeordnet, wobei die Federeinheiten 76, 80 Schraubendruckfedern aufweisen, die in den Ausnehmungen 80 gelagert sind. Die Schiebeeinheiten 70, 72 weisen jeweils zwei einander zugeordnete Halbschalen 82, 84, 86, 88 auf. Die erste Schiebeeinheit 70 ist aus den Halbschalen 82 und 84 gebildet, wobei die Halbschale 82 an dem ersten Schwenkmodul 4 und die Halbschale 84 an dem zweiten Schwenkmodul 6 angeordnet sind. Die zweite Schiebeeinheit 70 ist aus den Halbschalen 86 und 88 gebildet, wobei die Halbschale 86 an dem ersten Schwenkmodul 4 und die Halbschale 88 an dem zweiten Schwenkmodul 6 angeordnet ist. Die einander zugeordneten Halbschalen 82, 84, 86, 88 weisen im geschlossenen Zustand ineinandergreifende Formelemente 91 auf, wobei jeweils ein Vorsprung in eine Ausnehmung greift, um die axiale Relativposition der jeweiligen Halbschalen 82, 84, 86, 88 zueinander im geschlossenen Zustand des Presswerkzeugs 2 festzulegen. Wie Fig. 2c zu entnehmen ist, ist jede der Halbschalen 82, 84, 86, 88 auf zwei Bolzen 74 schiebebeweglich gehalten.

Wie in Fig. 2b dargestellt ist, sind an dem Presswerkzeug 2 Pressmittel 90 zum Verschieben der Schiebemittel 44 entlang der axialen Wirkrichtungen R1, R2 vorgesehen. Die Pressmittel 90 und die Schiebemittel 44 weisen einander zugeordnete Gleitflächen 92, 94, 96, 98, 100, 102, 104, 106 auf, wobei die Gleitflächen 92, 94, 96, 98 der Pressmittel 90 an keilförmig zulaufenden Pressabschnitten 108, 110 gebildet sind. Die Gleitflächen 100, 102, 104, 106 sind an einander zugewandten Bereichen der Schiebeeinheiten 70, 72 vorgesehen, wobei die einander zugeordneten Gleitflächen 100, 102, 104, 106 der Schiebeeinheiten 70, 72 in der Grundstellung der Schiebeeinheiten 70, 72 keilförmige Ausnehmungen begrenzen. Die Gleitflächen 92, 94, 96, 98, 100, 102, 104, 106 bewirken ein Umsetzen einer radialen, also quer zu den axialen Wirkrichtungen R1, R2 erfolgenden Bewegung der Pressmittel 90 in ein axiales Verschieben der Schiebeeinheiten 70, 72. Dabei dienen die Gleitflächen 92, 94 dem axialen Verschieben der ersten Schiebeeinheit 70 in Richtung der Halteeinheit 50 und die Gleitflächen 96, 98 dem axialen Verschieben der zweiten Schiebeeinheit 72 in Richtung der Halteinheit 52. Die Pressabschnitte 108, 110 sind an den Schwenkelementen 22, 26 der Schwenkmodule 4, 6 vorgesehen, wobei die Schiebeeinheiten 70, 72 zwischen den Pressabschnitten 108, 110 angeordnet sind. Eine Schwenken der Schwenkelemente 22, 26 resultiert daher in einer radialen Bewegung der Pressabschnitte 108, 110 relativ zu den Schiebeeinheiten 70, 72.

Fig. 2c zeigt einen Schnitt des Presswerkzeugs 2 entlang der Schnittlinie II-c aus Fig. 2a, um insbesondere die Schrägflächen 104, 106 und die Gestalt der Halbschalen 86, 88 der zweiten Halteeinheit 52 hervorzuheben.

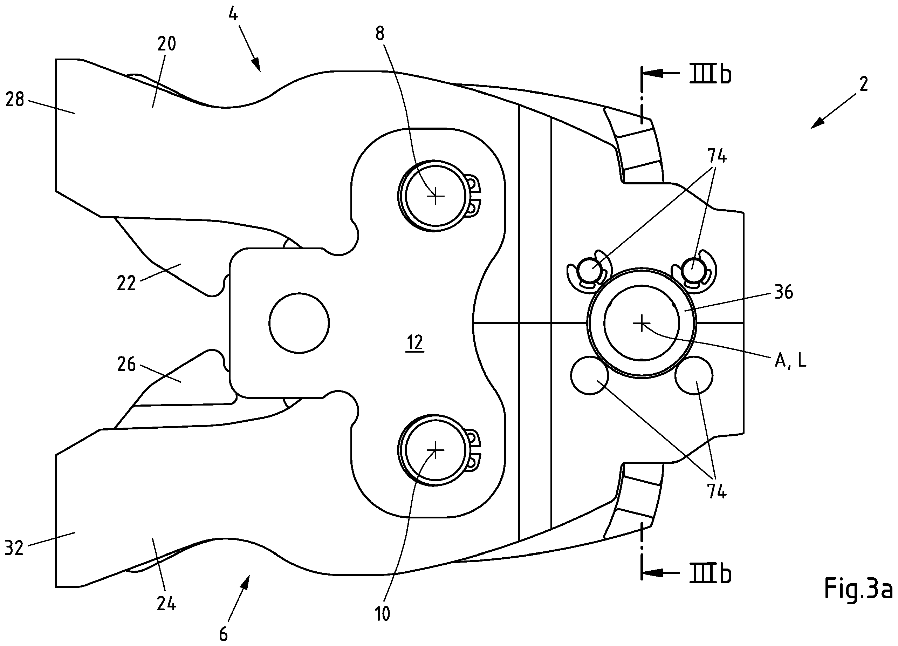

In Fig. 3a ist eine Seitenansicht des Presswerkzeugs 2 aus Fig. 1 mit geschlossenen Haltemitteln 40 dargestellt. Zum Überführen der Halteeinheiten 50, 52 der Haltemittel 40 aus der in Fig. 2b dargestellten, geöffneten Stellung in die in Fig. 3a dargestellte, geschlossene Stellung sind die äußeren Schwenkelemente 20, 24 um ihre jeweilige Schwenkachse 8, 10 in Richtung des Fittings 36 geschwenkt worden. Dazu sind die äußeren Schwenkelemente 20, 24 im Bereich ihrer Betätigungsabschnitte 28, 32 mithilfe einer Kraftmaschine (nicht dargestellt) gespreizt bzw. auseinander gedrückt worden.

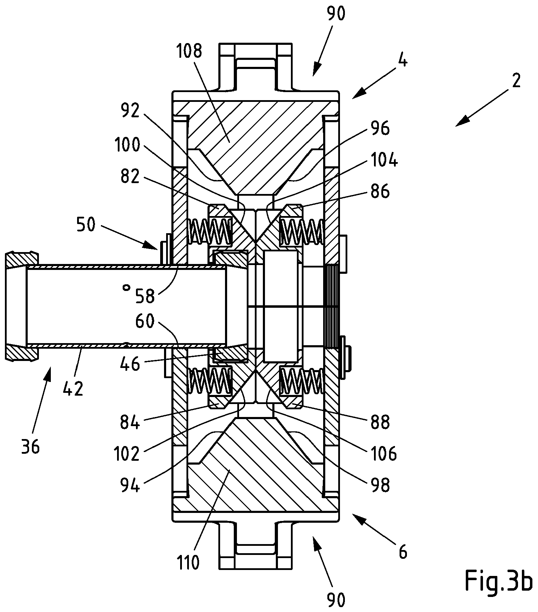

Fig. 3b zeigt einen Schnitt des Presswerkzeugs 2 entlang der Schnittlinie III-b aus Fig. 3a. Die erste Halteeinheit 50 umgreift den Grundkörper 42 des Fittings 36 umfangsseitig. Die Klemmflächen 58, 60 der Halteeinheit 50 dienen dabei der kraft- und formschlüssigen Fixierung des Grundkörpers 42 des Fittings 36 sowohl in axialer als auch in radialen Richtung. Der entgegen einem axialen Verschieben wirkende Formschluss zwischen dem Presswerkzeug 2 und dem Fitting 36 wird dabei durch die Profilierung der Klemmflächen 58, 60 erzeugt, wobei die radial nach innen gewandten Stege der Profilierung im Bereich der den Klemmflächen 58, 60 der Halteeinheit 50 zugewandten äußeren Mantelfläche des Grundkörpers 42 eine plastische Verformung bewirken.

Die im Bereich des Pressendes 48 auf den Grundkörper 42 aufzuschiebende Presshülse 46 ist umfangseitig und im Bereich ihrer stirnseitigen Planflächen von den Halbschalen 82, 84 der ersten Schiebeeinheit 70 aufgenommen. Dazu ist in jeder der Halbschalen 82, 84 eine Nut gebildet. Die Gleitflächen 92, 94, 96, 98 der Pressabschnitte 108, 110 und die Gleitflächen 100, 102, 104, 106 der Schiebeeinheiten 70, 72 sind mit einem Abstand zueinander angeordnet, so dass in diesem Zustand des Presswerkzeugs 2 keine Presskräfte von den Pressmitteln 90 auf die Schiebemittel 44 übertragen werden. Die hier dargestellte Position der Schwenkelemente 20, 22, 24, 26 beschreibt das Fixieren und Ausrichten der zu fügenden Verbindungselemente des Grundkörpers 42 und der Presshülse 46 innerhalb des Presswerkzeugs 2 unmittelbar vor dem eigentlichen Pressvorgang.

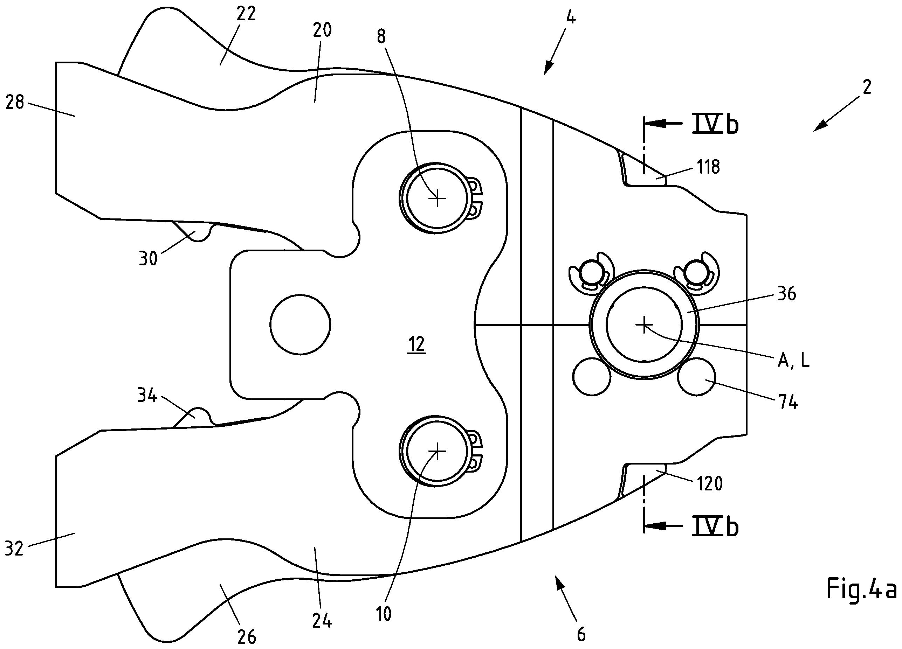

Fig. 4a zeigt eine Seitenansicht des Presswerkzeugs 2 im geschlossenen Zustand. Neben den äußeren Schwenkelementen 20, 24 der Schwenkmodule 4, 6 sind auch die inneren Schwenkelemente 22, 26 der Schwenkmodule 4, 6 im Bereich ihrer Betätigungsabschnitte 30, 34 mithilfe einer Kraftmaschine (nicht dargestellt) auseinander gedrückt worden. Das Presswerkzeug 2 befindet sich folglich im vollständig geschlossenen Zustand, wie bereits in Fig. 1 für das Presswerkzeug 2 ohne das zu verpressende Fitting 36 gezeigt worden ist.

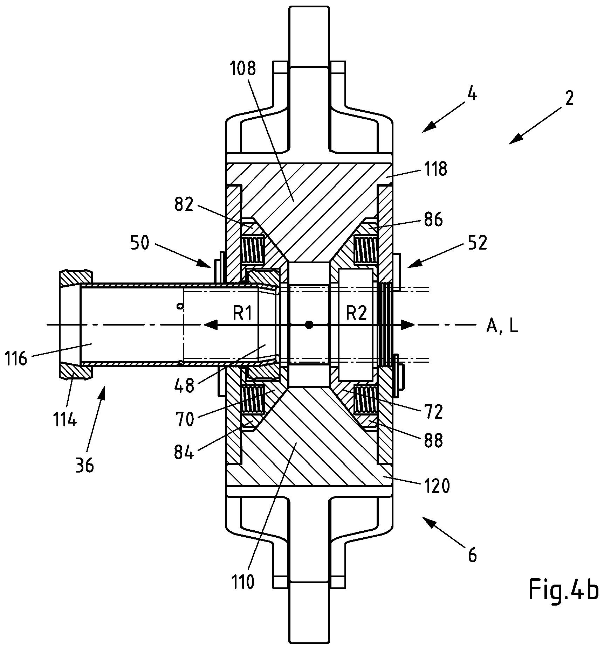

In Fig. 4b ist ein Schnitt des Presswerkzeugs 2 entlang der Schnittlinie IV-b aus Fig. 4a dargestellt. Durch das radial nach innen gerichtete Schwenken der Presseabschnitte 108, 110 sind die erste Schiebeeinheit 70 und die zweite Schiebeeinheit 72 aus ihrer zentralen Grundstellung auf den Bolzen 74 entlang der jeweils zugeordneten axialen Wirkrichtungen R1, R2 in Richtung der Halteeinheiten 50, 52 bewegt worden. Die radial nach innen gerichtete Bewegung der Presseabschnitte 108, 110 ist dabei durch einen Abgleiten der Schiebeeinheiten 70, 72 entlang der Gleitflächen 92, 94, 96, 98, 100, 102, 104, 106 in eine axiale Bewegung der Schiebeeinheiten 70, 72 entlang der Achse A umgesetzt worden. Dabei sind die Schiebeeinheiten 70, 72 von den Pressabschnitten 108, 110 synchron aus der zentralen Grundstellung nach außen verdrängt worden. Durch das Verschieben der Schiebeeinheit 70 ist die Presshülse 46 in der ersten axialen Wirkrichtung R1 entlang der Achse A auf den in der Halteeinheit 50 fixierten Grundkörper 42 des Fittings 36 aufgeschoben worden. Der in von dem Grundkörper 42 abgewandter Richtung verjüngt ausgeführte Durchmesser der Presshülse 46 bewirkt während der axialen Verschiebung ein radial nach innen gerichtetes Umformen des Grundkörpers 42 im Bereich des Pressendes 48. Auf diese Weise kann das Fitting 36 mit einem in dem Fitting aufgenommenen Rohr verpresst werden, wobei das Rohr in Fig. 4b durch die strichpunktierte Linie dargestellt ist. Der Rand des Grundkörpers 42 im Bereich des Pressendes ist dann radial nach innen umgebördelt und dringt in die Wandung des Rohrs ein.

Ebenso ist es mit dem vorliegenden Presswerkzeug 2 möglich, eine zweite Presshülse 114 im Bereich eines zweiten Pressendes 116 auf den Grundkörper 42 des Fittings 36 aufzuschieben, wobei lediglich die axiale relativ Position des Presswerkzeugs 2 zu dem Fitting 36 verändert werden muss, die Orientierung, d.h. die Winkellage, des Presswerkzeugs 2 relativ zu dem Fitting 36 jedoch beibehalten werden kann. So kann das Presswerkzeug 2 nach dem Verpressen der Presshülse 46 mit der zweiten Schiebeeinheit 72 über der zweiten Presshülse 114 positioniert werden, so dass die Presshülse 114 von der zweiten Schiebeeinheit 72 aufgenommen und der Grundkörper 42 des Fittings 36 mithilfe der zweiten Halteeinheit 52 in dem Presswerkzeug 2 fixiert wird. Der Pressvorgang zum Verbinden eines in dem Fitting 36 aufgenommenen zweiten Rohrendes eines zweiten Rohrs (nicht dargestellt) kann dann im Bereich des zweiten Pressendes 116 in zum voranstehenden Pressvorgang analoger Weise erfolgen.

Um einem Verformen oder Aufweiten der äußeren Schwenkelemente 20, 24 der Schwenkmodule 4, 6 zu vermeiden, sind an den Pressabschnitten 108, 110 die Anschläge 118, 120 vorgesehen, die durch eine Begrenzung des radial nach innen gerichteten Schwenkwegs der inneren Schwenkelemente 22, 26 während des Pressvorgangs auch den nach außen gerichteten Axialhub der Schiebeeinheiten 70, 72 begrenzen.

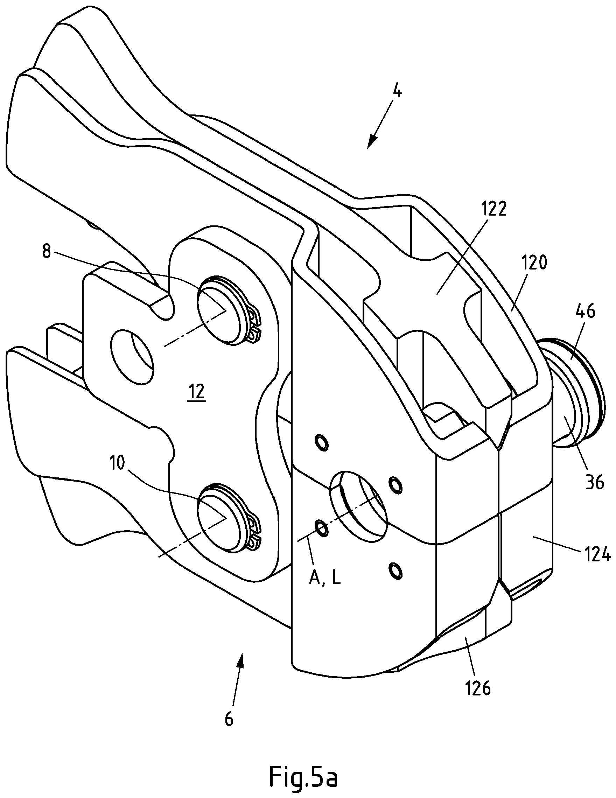

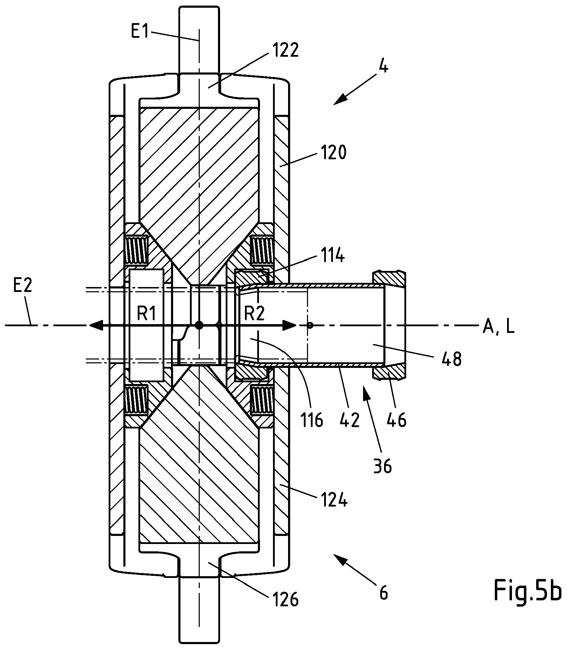

In einer weiteren erfindungsgemäßen Ausführungsform eines Presswerkzeugs 118 ist es ebenfalls denkbar, auf derartige Mittel zum Begrenzen des Axialhubs zu verzichten, wie in den Figuren 5a und 5b dargestellt, wobei hier im Vergleich zu den vorherigen Figuren gleichen Bauteilen gleiche Bezugszeichen zugeordnet worden sind. Insgesamt unterscheidet sich das in Fig. 5 gezeigte Presswerkzeug 118 von dem voranstehend beschriebenen Ausführungsbeispiel durch das Fehlen des voranstehend beschriebenen Anschläge 118, 120. Somit weichen lediglich die Schwenkelemente 120, 122, 124, 126 von den mit Bezug zu dem ersten Ausführungsbeispiel beschriebenen Komponenten ab.

Die zuvor beschriebenen Presswerkzeuge 2 und 118 sind jeweils im Wesentlichen spiegelsymmetrisch zu den Ebenen E1 und E2 ausgeführt.

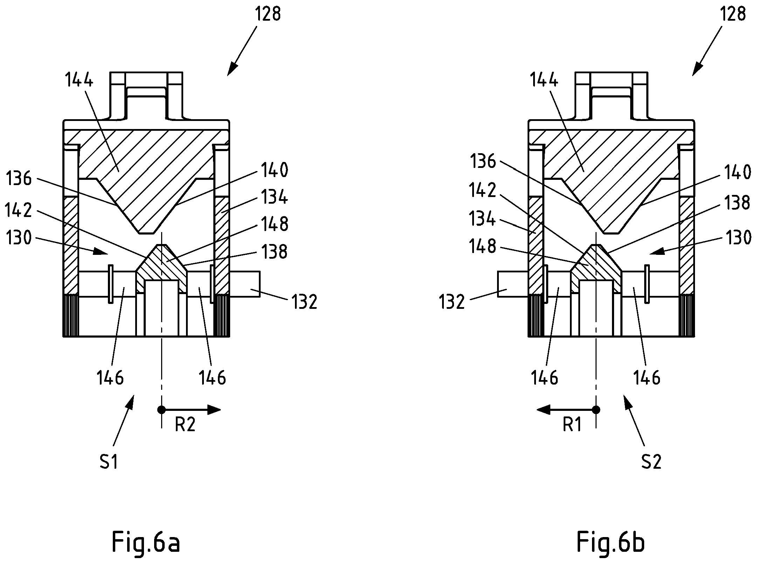

In Fig. 6 ist ein Viertelschnitt eines weiteren erfindungsgemäßen Presswerkzeugs 128 dargestellt. Das Presswerkzeug 128 hat eine schaltbare Schiebeeinheit 130 die zwischen einer ersten Schaltstellung S1 und einer zweiten Schaltstellung S2 zusammen mit dem Bolzen 132 bewegbar ist. Der Bolzen 132 kann in der jeweiligen Schaltstellung relativ zu dem Schwenkelement 134 mittels einer Arretiervorrichtung (nicht dargestellt) arretiert werden. Je nach gewählter Schaltstellung S1, S2 wirken beim Schließen des Presswerkzeugs 128 die ersten oder die zweiten Gleitflächen 136, 138,140,142 von Pressabschnitt 144 und Schiebeeinheit 130 zum Verschieben der Schiebeeinheit 130 in der jeweils zugeordneten Wirkrichtung R1, R2 zusammen. Die Schiebeeinheit 130 ist mittels Federeinheiten 146 (nicht dargestellt) in einer zentralen Position vorgespannt auf dem Bolzen 132 gehalten. Die erste Halbschale 148 der Schiebeeinheit 130 kann eine zweite Halbschale der Schiebeeinheit über Form- oder Kopplungselemente zwischen den jeweiligen Schaltstellungen S1, S2 mitführen (nicht dargestellt).

## Patentansprüche

1. Presswerkzeug zum Herstellen einer unlösbaren Rohrverbindung,
- mit Haltemitteln (40) zum umfangsseitigen Halten wenigstens eines ersten rohr- oder hülsenförmigen Verbindungselements (42) und
- mit Schiebemitteln (44) zum umfangsseitigen Halten und axialen Verschieben wenigstens eines zweiten rohr- oder hülsenförmigen Verbindungselements (46, 114),
- wobei die Schiebemittel (44) zum Verpressen zweier ineinandergreifender rohr- oder hülsenförmiger Verbindungselemente (42, 46, 114) entlang einer ersten axialen Wirkrichtung (R1) in Richtung der Haltemittel (40) bewegbar sind,
- wobei die Schiebemittel (44) zum Verpressen zweier ineinandergreifender rohr- oder hülsenförmiger Verbindungselemente (42, 46, 114) entlang einer der ersten axialen Wirkrichtung (R1) entgegengesetzten, zweiten axialen Wirkrichtung (R2) in Richtung der Haltemittel (40) bewegbar sind,
- wobei die Schiebemittel (44) wenigstens eine erste Schiebeeinheit (70) und wenigstens eine zweite Schiebeeinheit (72) aufweisen und
- wobei die Schiebeeinheiten (70, 72) axial gegenläufig verschiebbar und dazu gebildet sind, in entgegengesetzten Wirkrichtungen (R1, R2) mit den Haltemitteln (40) zusammenzuwirken,
**dadurch gekennzeichnet,**
- **dass** die Schiebeeinheiten (70, 72) entlang wenigstens einer gemeinsamen Achse (A) geführt sind,
- wobei die Schiebeeinheiten (70, 72) in einer Grundstellung benachbart zueinander angeordnet sind.

2. Presswerkzeug nach Anspruch 1,
**dadurch gekennzeichnet,**
**dass** die Schiebeeinheiten (70, 72) federnd elastisch gegeneinander vorgespannt sind.

3. Presswerkzeug nach einem der Ansprüche 1 oder 2,
**dadurch gekennzeichnet,**
- **dass** die Haltemittel (40) eine erste Halteeinheit (50) und eine mit einem Abstand zu der ersten Halteeinheit (50) angeordnete, zweite Halteeinheit (52) aufweisen,
- wobei die Schiebemittel (44) zwischen der ersten Halteeinheit (50) und der zweiten Halteeinheit (52) angeordnet sind und
- wobei die erste Halteeinheit (50) der ersten axialen Wirkrichtung (R1) und die zweite Halteeinheit (52) der zweiten axialen Wirkrichtung (R2) zugeordnet ist.

4. Presswerkzeug nach Anspruch 3,
**dadurch gekennzeichnet,**
**dass** zwischen der ersten Halteeinheit (50) und der ersten Schiebeinheit (70) eine erste Federeinheit (76) und zwischen der zweiten Halteeinheit (52) und der zweiten Schiebeeinheit (72) eine zweite Federeinheit (78) angeordnet ist.

5. Presswerkzeug nach einem der Ansprüche 1 bis 4,
**dadurch gekennzeichnet,**
**dass** die Haltemittel (40) und die Schiebemittel (44) an quer zu den axialen Wirkrichtungen (R1, R2) schwenkbaren Schwenkelementen (20, 24) vorgesehen sind.

6. Presswerkzeug nach einem der Ansprüche 1 bis 5,
**dadurch gekennzeichnet,**
- **dass** Pressmittel (90) zum Verschieben der Schiebemittel (44) entlang der axialen Wirkrichtungen (R1, R2) vorgesehen sind,
- wobei die Pressmittel (90) und die Schiebemittel (44) einander zugeordnete Gleitflächen (92, 94, 96, 98, 100, 102, 104, 106) aufweisen,
- wobei die Gleitflächen (92, 94, 96, 98, 100, 102, 104, 106) zum Umsetzten einer quer zu den axialen Wirkrichtungen (R1, R2) erfolgenden Bewegung der Pressmittel (90) in ein axiales Verschieben der Schiebemittel (44) gebildet sind und
- erste Gleitflächen (92, 94, 100, 102) zum Verschieben der Schiebemittel (44) in der ersten axialen Wirkrichtung (R1) und zweite Gleitflächen (96, 98, 104, 106) zum Verschieben der Schiebemittel (44) in der zweiten axialen Wirkrichtung (R2) vorgesehen sind.

7. Presswerkzeug nach Anspruch 6,
**dadurch gekennzeichnet,**
**dass** die Pressmittel (90) an quer zu den axialen Wirkrichtungen (R1, R2) schwenkbaren Schwenkelementen (22, 26) vorgesehen sind.

8. Presswerkzeug nach Anspruch 6 oder Anspruch 7,
**dadurch gekennzeichnet,**
- **dass** die Pressmittel (90) in Richtung der Schiebemittel (44) im Wesentlichen keilförmig zulaufende Pressabschnitte (108, 110) aufweisen, an denen die ersten und zweiten Gleitflächen (92 - 98) der Pressmittel (90) gebildet sind,
- wobei die Schiebemittel (44) zwischen den Pressabschnitten (108, 110) angeordnet sind und die Pressabschnitte (108, 110) die Schiebemittel (44) in einer Ebene (E1) quer zu den axialen Wirkrichtungen (R1, R2) zumindest teilweise umgreifen.

9. Presswerkzeug nach einem der Ansprüche 1 bis 8,
**dadurch gekennzeichnet,**
- **dass** die Haltemittel (40) und/oder die Schiebemittel (44) und/oder die Pressmittel (90) bezüglich einer radialen Werkzeugebene (E1) im Wesentlichen spiegelsymmetrisch gestaltet sind,
- wobei die radiale Werkzeugebene (E1) quer zu den axialen Wirkrichtungen (R1, R2) erstreckt ist.

10. Presswerkzeug nach einem der Ansprüche 1 bis 9,
**dadurch gekennzeichnet,**
- **dass** die Haltemittel (40) und/oder die Schiebemittel (44) und/oder die Pressmittel (90) bezüglich einer axialen Werkzeugebene (E2) im Wesentlichen spiegelsymmetrisch gestaltet sind,
- wobei die axiale Werkzeugebene (E2) entlang der axialen Wirkrichtungen (R1, R2) erstreckt ist.

11. Presswerkzeug zum Herstellen einer unlösbaren Rohrverbindung,
- mit Haltemitteln (40) zum umfangsseitigen Halten wenigstens eines ersten rohr- oder hülsenförmigen Verbindungselements (42) und
- mit Schiebemitteln (44) zum umfangsseitigen Halten und axialen Verschieben wenigstens eines zweiten rohr- oder hülsenförmigen Verbindungselements (46, 114),
- wobei die Schiebemittel (44) zum Verpressen zweier ineinandergreifender rohr- oder hülsenförmiger Verbindungselemente (42, 46, 114) entlang einer ersten axialen Wirkrichtung (R1) in Richtung der Haltemittel (40) bewegbar sind,
- wobei die Schiebemittel (44) zum Verpressen zweier ineinandergreifender rohr- oder hülsenförmiger Verbindungselemente (42, 46, 114) entlang einer der ersten axialen Wirkrichtung (R1) entgegengesetzten, zweiten axialen Wirkrichtung (R2) in Richtung der Haltemittel (40) bewegbar sind,
**dadurch gekennzeichnet,**
- **dass** die Schiebemittel (44) wenigstens eine schaltbare Schiebeeinheit (130) aufweisen,
- wobei die Schiebeeinheit (130) in einer ersten Schaltstellung (S1) in die erste axiale Wirkrichtung (R1) des Presswerkzeugs (128) verschiebbar ist und in der zweiten Schaltstellung (S2) in die zweite axiale Wirkrichtung (R2) des Presswerkzeugs (128) verschiebbar ist.

12. Presswerkzeug nach Anspruch 11,
**dadurch gekennzeichnet,**
- **dass** die schaltbare Schiebeeinheit (130) auf wenigstens einem Bolzen (132) sitzt,
- wobei die Schiebeeinheit (130) zusammen mit dem Bolzen (132) aus der ersten Schaltstellung (S1) in die zweite Schaltstellung (S2) bewegbar ist.

13. System zum Herstellen einer unlösbaren Rohrverbindung,
- mit einem ersten Verbindungselement (42) zur Aufnahme eines zu verbindenden Rohrendes,
- mit einem dem ersten Verbindungselement (46) zugeordneten zweiten Verbindungselement (46, 114), das zum axialen Aufschieben auf das erste Verbindungselement gebildet ist, und
- mit einem Presswerkzeug (2, 118, 128) zum Verpressen der Verbindungselemente (42, 46, 114),
- wobei das Presswerkzeug (42, 46, 114) nach einem der voranstehenden Ansprüche 1 bis 12 gebildet ist.

## Claims

1. Pressing tool for producing an non-detachable pipe connection, comprising
- holding means (40) for holding the periphery of at least one first tubular or sleeve-shaped connection element (42) and
- slide means (44) for peripherally holding and axially displacing at least one second tubular or sleeve-shaped connection element (46, 114),
- the slide means (44) being movable along a first axial operating direction (R1) towards the holding means (40) to press two interengaging tubular or sleeve-shaped connection elements (42, 46, 114),
- the slide means (44) are movable towards the holding means (40) along a second axial operating direction (R2) opposite the first axial operating direction (R1) to press two interengaging tubular or sleeve-shaped connection elements (42, 46, 114),
- the slide means (44) have at least one first slide unit (70) and at least one second slide unit (72) and
- the slide units (70, 72) being axially displaceable in opposite directions and being configured to cooperate with the holding means (40) in opposite operating directions (R1, R2),
**characterised in that**
- the slide units (70, 72) are guided along at least one common axis (A),
- the slide units (70, 72) being arranged, closely, next to one another in a starting position.

2. Pressing tool according to claim 1, **characterised in that** the slide units (70, 72) are pretensioned resiliently against one another.

3. Pressing tool according to either claim 1 or claim 2, **characterised in that**
- the holding means (40) have a first holding unit (50) and a second holding unit (52) which is arranged at a distance from the first holding unit (50),
- the slide means (44) being arranged between the first holding unit (50) and the second holding unit (52) and
- the first holding unit (50) being associated with the first axial operating direction (R1) and the second holding unit (52) being associated with the second axial operating direction (R2).

4. Pressing tool according to claim 3, **characterised in that** a first spring unit (76) is arranged between the first holding unit (50) and the first slide unit (70) and a second spring unit (78) is arranged between the second holding unit (52) and the second slide unit (72).

5. Pressing tool according to any one of claims 1 to 4, **characterised in that** the holding means (40) and the slide means (44) are provided on swivel elements (20, 24) which can swivel transversely to the axial operating directions (R1, R2).

6. Pressing tool according to any one of claims 1 to 5, **characterised in that**
- pressing means (90) are provided for displacing the slide means (44) along the axial operating directions (R1, R2),
- the pressing means (90) and the slide means (44) having mutually associated slide surfaces (92, 94, 96, 98, 100, 102, 104,106),
- the slide surfaces (92, 94, 96, 98, 100, 102, 104, 106) being configured to transform a movement of the pressing means (90) transversely to the axial operating directions (R1, R2) into an axial displacement of the slide means (44) and
- first slide surfaces (92, 94, 100, 102) are provided to displace the slide means (44) in the first axial operating direction (R1) and second slide surfaces (96, 98, 104,106) are provided to displace the slide means (44) in the second axial operating direction (R2).

7. Pressing tool according to claim 6, **characterised in that** the pressing means (90) are provided on swivel elements (22, 26) which can swivel transversely to the axial operating directions (R1, R2).

8. Pressing tool according to claim 6 or claim 7, **characterised in that**
- the pressing means (90) have pressing portions (108, 110) which taper substantially in a wedge shape in the direction of the slide means (44) and on which the first and second slide surfaces (92 - 98) of the pressing means (90) are formed,
- the slide means (44) being arranged between the pressing portions (108, 110) and the pressing portions (108, 110) at least partly encompassing the slide means (44) in a plane (E1) transverse to the axial operating directions (R1, R2).

9. Pressing tool according to any one of claims 1 to 8, **characterised in that**
- the holding means (40) and/or the slide means (44) and/or the pressing means (90) are configured to be substantially mirror-symmetrical with respect to a radial tool plane (E1),
- the radial tool pane (E1) extending transversely to the axial operating directions (R1, R2).

10. Pressing tool according to any one of claims 1 to 9, **characterised in that**
- the holding means (40) and/or the slide means (44) and/or the pressing means (90) are configured to be substantially mirror-symmetrical with respect to an axial tool plane (E2),
- the axial tool plane (E2) extending along the axial operating directions (R1, R2).

11. Pressing tool for producing an non-detachable pipe connection, comprising
- holding means (40) for holding the periphery of at least one first tubular or sleeve-shaped connection element (42) and
- slide means (44) for peripherally holding and axially displacing at least one second tubular or sleeve-shaped connection element (46,114),
- the slide means (44) being movable along a first axial operating direction (R1) towards the holding means (40) to press two interengaging tubular or sleeve-shaped connection elements (42, 46, 114),
- the slide means (44) are movable towards the holding means (40) along a second axial operating direction (R2) opposite the first axial operating direction (R1) to press two interengaging tubular or sleeve-shaped connection elements (42, 46, 114),
**characterised in that**
- the slide means (44) have at least one switchable slide unit (130),
- the slide unit (130) being, in a first switch position (S1), movable into the first axial operating direction (R1) of the pressing tool (128) and, in the second switch position (S2), being movable into the second axial operating direction (R2) of the pressing tool (128).

12. Pressing tool according to claim 11, **characterised in that**
- the switchable slide unit (130) sits on at least one bolt (132),
- the slide unit (130) together with the bolt (132) being movable out of the first switch position (S1) into the second switch position (S2).

13. System for producing a non-detachable pipe connection, comprising
- a first connection element (42) for receiving an end of a pipe to be connected,
- a second connection element (46, 114) which is associated with the first connection element (46) and is configured to be axially pushed onto the first connection element, and
- a pressing tool (2, 118, 128) for pressing the connection elements (42, 46, 114),
- wherein the pressing tool (42, 46, 114) is configured according to any one of the preceding claims 1 to 12.

## Revendications

1. Outil de compression servant à la fabrication d'un raccord de tuyau non détachable, ledit outil de compression
- comprenant des moyens de retenue (40) servant au maintien, côté circonférence, d'au moins un premier élément de raccordement (42) de forme tubulaire ou en forme de douille, et
- comprenant des moyens coulissants (44) servant au maintien côté circonférence et servant au déplacement axial d'au moins un deuxième élément de raccordement (46, 114) de forme tubulaire ou en forme de douille,
- où les moyens coulissants (44) servant à la compression de deux éléments de raccordement (42, 46, 114) de forme tubulaire ou en forme de douille, s'emboîtant l'un dans l'autre, peuvent être déplacés le long d'une première direction active axiale (R1), en direction des moyens de retenue (40),
- où les moyens coulissants (44) servant à la compression de deux éléments de raccordement (42, 46, 114) de forme tubulaire ou en forme de tube, s'emboîtant l'un dans l'autre, peuvent être déplacés le long d'une deuxième direction active axiale (R2) opposée à la première direction active axiale (R1), en direction des moyens de retenue (40),
- où les moyens coulissants (44) présentent au moins une première unité coulissante (70) et au moins une deuxième unité coulissante (72), et
- où les unités coulissantes (70, 72) peuvent être déplacées axialement en sens opposé et sont formées pour fonctionner de façon conjointe avec les moyens de retenue (40), dans des directions actives opposées (R1, R2),
**caractérisé**
- **en ce que** les unités coulissantes (70, 72) sont guidées le long d'au moins un axe commun (A),
- où les unités coulissantes (70, 72), dans une position de base, sont disposées en étant contiguës l'une à l'autre.

2. Outil de compression selon la revendication 1,
**caractérisé**
- **en ce que** les unités coulissantes (70, 72) sont précontraintes élastiquement l'une contre l'autre, par des ressorts.

3. Outil de compression selon l'une des revendications 1 ou 2,
**caractérisé**
- **en ce que** les moyens de retenue (40) présentent une première unité de retenue (50) et une deuxième unité de retenue (52) disposée en étant à une certaine distance par rapport à la première unité de retenue (50),
- où les moyens coulissants (44) sont disposés entre la première unité de retenue (50) et la deuxième unité de retenue (52), et
- où la première unité de retenue (50) est associée à la première direction active axiale (R1), et la deuxième unité de retenue (52) est associée à la deuxième direction active axiale (R2).

4. Outil de compression selon la revendication 3,
**caractérisé**
**en ce qu'**une première unité à ressort (76) est disposée entre la première unité de retenue (50) et la première unité coulissante (70), et une deuxième unité à ressort (78) est disposée entre la deuxième unité de retenue (52) et la deuxième unité coulissante (72).

5. Outil de compression selon l'une quelconque des revendications 1 à 4,
**caractérisé**
**en ce que** les moyens de retenue (40) et les moyens coulissants (44) sont prévus au niveau d'éléments de pivotement (20, 24) pouvant pivoter de manière transversale par rapport aux directions actives axiales (R1, R2).

6. Outil de compression selon l'une quelconque des revendications 1 à 5,
**caractérisé**
- **en ce qu'**il est prévu des moyens de compression (90) servant au déplacement des moyens coulissants (44) le long des directions actives axiales (R1, R2),
- où les moyens de compression (90) et les moyens coulissants (44) présentent des surfaces de glissement (92, 94, 96, 98, 100, 102, 104, 106) associées les unes aux autres,
- où les surfaces de glissement (92, 94, 96, 98, 100, 102, 104, 106) sont formées pour la transformation d'un mouvement des moyens de compression (90), ledit mouvement se produisant de manière transversale par rapport aux directions actives axiales (R1, R2), ledit mouvement étant transformé en un déplacement axial des moyens coulissants (44), et
- il est prévu des premières surfaces de glissement (92, 94, 100, 102) servant au déplacement des moyens coulissants (44) dans la première direction active axiale (R1), et il est prévu des deuxièmes surfaces de glissement (96, 98, 104, 106) servant au déplacement des moyens coulissants (44) dans la deuxième direction active axiale (R2).

7. Outil de compression selon la revendication 6,
**caractérisé**
**en ce que** les moyens de compression (90) sont prévus au niveau d'éléments de pivotement (22, 26) pouvant pivoter de manière transversale par rapport aux directions actives axiales (R1, R2).

8. Outil de compression selon la revendication 6 ou la revendication 7,
**caractérisé**
- **en ce que** les moyens de compression (90) présentent, dans la direction des moyens coulissants (44), des parties de compression (108, 110) se terminant pratiquement en forme de coin, parties de compression sur lesquelles sont formées les premières et les deuxièmes surfaces de glissement (92 - 98) des moyens de compression (90),
- où les moyens coulissants (44) sont disposés entre les parties de compression (108, 110), et les parties de compression (108, 110) enserrent au moins partiellement les moyens coulissants (44) dans un plan (E1) disposé de manière transversale par rapport aux directions actives axiales (R1, R2).

9. Outil de compression selon l'une quelconque des revendications 1 à 8,
**caractérisé**
- **en ce que** les moyens de retenue (40) et/ou les moyens coulissants (44) et/ou les moyens de compression (90) sont configurés en étant pratiquement à symétrie spéculaire par rapport à un plan d'outil radial (E1),
- où le plan d'outil radial (E1) est étendu de manière transversale par rapport aux directions actives axiales (R1, R2).

10. Outil de compression selon l'une quelconque des revendications 1 à 9,
**caractérisé**
- **en ce que** les moyens de retenue (40) et/ou les moyens coulissants (44) et/ou les moyens de compression (90) sont configurés en étant pratiquement à symétrie spéculaire par rapport à un plan d'outil axial (E2),
- où le plan d'outil axial (E2) est étendu le long des directions actives axiales (R1, R2).

11. Outil de compression servant à la fabrication d'un raccord de tuyau non détachable, ledit outil de compression
- comprenant des moyens de retenue (40) servant au maintien, côté circonférence, d'au moins un premier élément de raccordement (42) de forme tubulaire ou en forme de douille et
- comprenant des moyens coulissants (44) servant au maintien côté circonférence et servant au déplacement axial d'au moins un deuxième élément de raccordement (46, 114) de forme tubulaire ou en forme de douille,
- où les moyens coulissants (44) servant à la compression de deux éléments de raccordement (42, 46, 114) de forme tubulaire ou en forme de douille, s'emboîtant l'un dans l'autre, peuvent être déplacés le long d'une première direction active axiale (R1), en direction des moyens de retenue (40),
- où les moyens coulissants (44) servant à la compression de deux éléments de raccordement (42, 46, 114) de forme tubulaire ou en forme de douille, s'emboîtant l'un dans l'autre, peuvent être déplacés le long d'une deuxième direction active axiale (R2) opposée à la première direction active axiale (R1), en direction des moyens de retenue (40),
**caractérisé**
- **en ce que** les moyens coulissants (44) présentent au moins une unité coulissante (130) manoeuvrable,
- où l'unité coulissante (130) se trouvant dans une première position de manoeuvre (S1) peut être déplacée dans la première direction active axiale (R1) de l'outil de compression (128) et, se trouvant dans la deuxième position de manoeuvre (S2), peut être déplacée dans la deuxième direction active axiale (R2) de l'outil de compression (128).

12. Outil de compression selon la revendication 11, **caractérisé**
- **en ce que** l'unité coulissante (130) manoeuvrable est montée sur au moins une broche (132),
- où l'unité coulissante (130) peut être déplacée en même temps que la broche (132), passant de la première position de manoeuvre (S1) à la deuxième position de manoeuvre (S2).

13. Système de fabrication d'un raccord de tuyau non détachable
- comprenant un premier élément de raccordement (42) servant au logement d'une extrémité de tuyau à raccorder,
- comprenant un deuxième élément de raccordement (46, 114) associé au premier élément de raccordement (46), deuxième élément de raccordement qui est formé pour le coulissement axial sur le premier élément de raccordement, et
- ledit système comprend un outil de compression (2, 118, 128) servant à la compression des éléments de raccordement (42, 46, 114),
- où l'outil de compression (42, 46, 114) est formé selon l'une quelconque des revendications précédentes 1 à 12.
